# EUROPEAN PATENT APPLICATION

(11) **EP 1 008 876 A2**
(43) Date of publication of application: **14.06.2000**
(21) Application number: 99123869.2
(22) Date of filing: 01.12.1999
(51) Int. Cl.: G02B 6/26, G02B 6/42

(54) **Optical fiber tap and method of tapping an optical signal from an optical cable**

(30) Priority: 11.12.1998 US 209772
(71) Applicant: Litton Systems, Inc., Watertown Connecticut 06795-0500 (US)
(72) Inventor: Windebank, Robert W., Waterbury, Connecticut 06208 (US)
(74) Representative: MÜLLER & HOFFMANN Patentanwälte

(57) **Abstract**

The present invention is directed to an apparatus and method for tapping an optical signal from an optical waveguide indenting or deforming the optical fiber. The optical waveguide can be an optical cable or optical fiber. Advantageously, the optical waveguide can be kept in a straight condition and not substantially weakened because the optical waveguide is indented or deformed, but not bent. The optical waveguide is indented using an indenting assembly having an upper member and a lower member. An indenting portion is positioned in the upper member. The optical fiber is indented when the upper member and the lower member are fastened together forming an indent in the optical waveguide. One or more reflective surfaces may be formed in the indent of the optical waveguide. The indenter may also have one or more reflective surfaces. One or more of the reflective surfaces can reflect a portion of the optical signal carried by the optical fiber either inwardly or outwardly relative to the optical waveguide into a corresponding light sensor positioned adjacent the optical waveguide.

## Description

### Field of the Invention

The present invention relates generally to optical fiber taps, and more particularly, to an optical fiber tap in which the optical fiber is deformed, but not fractured or cracked.

### Background of the Invention

There are many applications where it is desirable to have an optical signal from an optical cable at a node located at an intermediate portion of the optical cable. At each node in such networks, an optical tap extracts a portion of the through signal carried by the optical fiber. Such optical taps typically extract the optical signal by reflecting the light into a light sensor. The optical signal can then be converted to an electrical signal using known techniques. Such optical taps are used, for example, in multiple-access, local area distribution networks.

An example of such an active optical fiber tap is disclosed in U.S. Patent No. 4,549,782. As illustrated in Figure 5 of the '782 patent, a pair of notches are cut into an optical fiber. Each notch has a reflective surface for reflecting an optical signal carried by the optical fiber. The optical cable has an inner core (or fiber) region surrounded by an outer cladding of lower refractive index. The depth of the notch determines the amount of optical power deflected. The disadvantage of such an arrangement is that the notches significantly reduce the strength and durability of the optical fiber. Further, the notches are formed by a special process in which the fiber is mounted on a tap assembly and then a mask is placed over the fiber exposing the later in the region of the desired notches. The notches are then reformed by a reactive ion etching process. The angle of the notch is controlled by tilting the entire assembly. Significant skill and special tools are required for forming such notches.

Another arrangement for tapping an optical fiber is disclosed in U.S. Patent No. 3,936,631. As illustrated in Figure 4 of the '631 patent, the optical fiber is deformed by bending to conform to the shape of a rounded surface. The resulting bend in the fiber causes a portion of the optical power propagating in the inner core of the fiber to radiate into the outer cladding from which it can be extracted by a coupling disk and eventually detected by a photodetector. The adjustment of the optical power can be achieved by varying the amount of pressure applied to the disk and the geometry of the rounded surface. Disadvantageously, a run of optical fiber cannot be kept straight because the optical fiber must be bent.

Other patents which disclose bending an optical fiber for extracting an optical signal include U.S. Patent Nos. 4,822,125, 4,856,864 and 5,039,188. The other disadvantage of such arrangements is that the light sensor must be specially positioned to extract the light which is caused to exit the fiber.

A need exists in the art for a simple, inexpensive optical fiber tap which can be installed in the field by an unskilled technician for tapping an optical signal from an optical cable or fiber. A further need exists for a method and apparatus for tapping an optical signal from an optical fiber in which the optical fiber can be kept straight. Yet a further need exists for a method and apparatus for tapping an optical signal from an optical fiber in which the optical fiber is not mechanically weakened by an optical tap.

### Summary of the Invention

It is, therefore, an object of the invention to provide an apparatus and method of use therefore for tapping an optical signal from an optical fiber or cable which requires minimal effort and skill.

It is another object of the present invention to provide an optical method and apparatus for tapping an optical signal from an optical fiber in which the optical fiber is deformed but not fractured or cracked.

It is yet another object of the present invention to provide a method and apparatus for tapping an optical signal from an optical fiber in which the optical fiber is maintained in a substantially straight condition while the optical signal is being tapped from the optical fiber.

It is yet a further object of the present invention to provide a method and apparatus for tapping an optical signal from an optical fiber in which the optical fiber is not substantially weakened.

These and other objects of the present invention are achieved by an apparatus and method for tapping an optical signal from an optical waveguide indenting or deforming the optical fiber. The optical waveguide can be an optical cable or optical fiber. Advantageously, the optical waveguide can be kept in a straight condition and not substantially weakened because the optical waveguide is indented or deformed, but not bent. The optical waveguide is indented using an indenting assembly having an upper member and a lower member. An indenting portion is positioned in the upper member. The optical fiber is indented when the upper member and the lower member are fastened together forming an indent in the optical waveguide. One or more reflective surfaces may be formed in the indent of the optical waveguide. The indenter may also have one or more reflective surfaces. One or more of the reflective surfaces can reflect a portion of the optical signal carried by the optical fiber either inwardly or outwardly relative to the optical waveguide into a corresponding light sensor positioned adjacent the optical waveguide.

The foregoing objects of the present invention are achieved by an arrangement for tapping an optical signal from an intermediate portion of an optical waveguide. The optical waveguide has an outer surface. A first member has an indenter. The indenter is at least partially positioned in an indent formed in the intermediate portion of the optical waveguide. At least one of the indent and the indenter has a reflective surface. An optical device is optically coupled to the optical waveguide for transmitting/receiving light reflected off the reflective surface and carried in the optical waveguide.

The foregoing and other objects of the present invention are also achieved by an apparatus including an optical waveguide provided in a substantially straight condition. A first member has an indenter. The indenter is at least partially positioned in an indent formed in an intermediate portion of the optical waveguide. At least one of the indent and the indenter has a reflective surface. An optical device is optically coupled to the optical waveguide for transmitting/receiving light reflected off the reflective surface and carried in the optical waveguide.

The foregoing and other objects of the present invention are also achieved by a method of tapping an optical signal from an optical waveguide including indenting the optical waveguide to form a reflective surface and reflecting the optical signal off of the reflective surface into a light sensor.

Still other objects and advantages of the present invention will become readily apparent to those skilled in the art from the following detailed description, wherein the preferred embodiments of the invention are shown and described, simply by way of illustration of the best mode contemplated of carrying out the invention. As will be realized, the invention is capable of other and different embodiments and its several details are capable of modifications in various obvious respects, all without departing from the invention. Accordingly, the drawings and description thereof are to be regarded as illustrative in nature, and not as restrictive.

### Brief Description of the Drawings

The present invention is illustrated by way of example, and not by limitation, in the figures of the accompanying drawings, wherein elements having the same reference numeral designations represent like elements throughout and wherein:
Figure 1 is an exploded perspective view of an indenting assembly and optical waveguide according to the present invention;
Figure 2 is a bottom plan view of an upper member of the indenting assembly of Figure 1;
Figure 3 is a side elevational view depicting the indenting portion, a λ filter, a polarizer and light sensor with the housings of the upper member and lower member omitted for clarity;
Figure 3A is an exploded side elevational view of the indenter and the indent of Figure 3;
Figure 3B is a side elevational view of various geometries of an indenting portion used with the upper member of Figure 2;
Figure 4 is a top plan view of the lower member;
Figure 5 is a schematic side elevational view of an indented optical fiber and light sensor with the indenting assembly omitted for clarity;
Figure 6 is a side elevational view of an indented optical fiber, pad, λ filter and polarizer with the indenting assembly omitted for clarity;
Figure 7 is a side elevational view of a double indented optical fiber with the indenting assembly omitted for clarity;
Figure 8 is a side elevational view of a second embodiment of double indented optical fiber with the indenting assembly omitted for clarity;
Figure 9 is a view illustrating the manner in which light is reflected within the indenting assembly of the present invention;
Figure 10 is a side elevational view of an embodiment showing a lens focusing the reflected optical signal into the light sensor; and
Figure 11 is an embodiment illustrating an indent reflecting optical signals in two directions into two different light sensors.

### Best Mode for Carrying Out the Invention

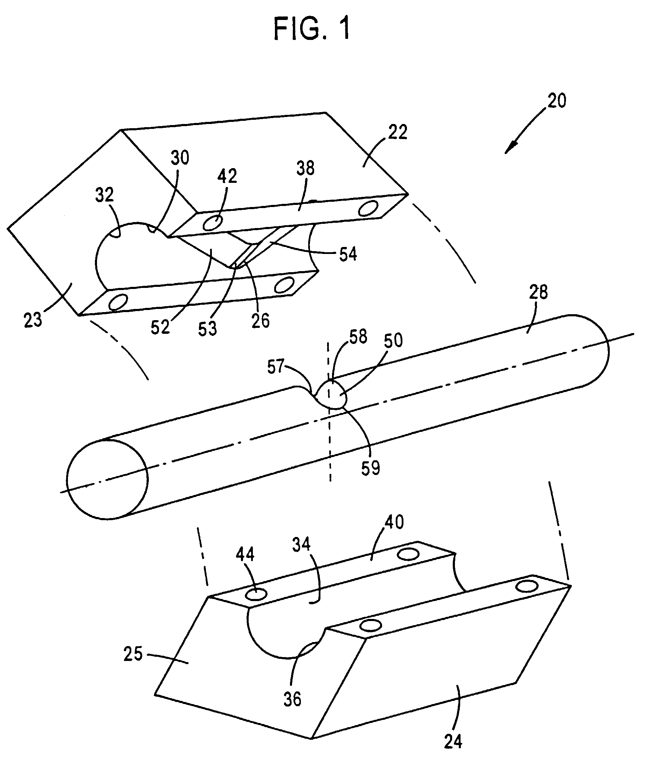

Referring first to Figure 1, there is depicted an indenting assembly, generally indicated at 20, which is constructed in accordance with the principles of the present invention. As used herein, terms such as "left", "right", "above" and "below" are to be construed in the relative sense. It is to be understood that the present invention is usable in any orientation. As depicted in Figure 1, the optical waveguide extends in a longitudinal direction and the indent or deformation extends in a transverse direction. The present application is related to co-pending patent application entitled "OPTICAL FIBER TAP AND METHOD OF TAPPING AN OPTICAL SIGNAL FROM AN OPTICAL CABLE" and assigned to the instant assignee and filed on even date herewith and is hereby incorporated by reference into this specification in its entirety.

As used herein "deform" means to alter the shape of the optical fiber by pressure or stress. As used herein "fracture" means a break, rupture or crack. As used herein "indent" means to form an indentation by deforming the optical waveguide, but without mechanically weakening the optical fiber by causing a fracture. By indenting or deforming an optical waveguide with an indenting assembly, the present invention advantageously forms an indent or deformation in the optical fiber or optical cable. The indent formed in the optical waveguide may have a reflective surface. Alternatively, or in combination with the reflective surface formed in the optical waveguide, the indenting assembly may have a reflective surface. Either or both of the reflective surfaces can be used for transversely reflecting light carried by the light carrying core of the optical fiber either inwardly or outwardly and then pass through the outer surface of the optical waveguide into a light sensor. Alternatively, instead of a light sensor, a light transmitter can inject light transversely through the outside diameter of the optical fiber to be reflected off a reflective surface into the light carrying core of the optical fiber.

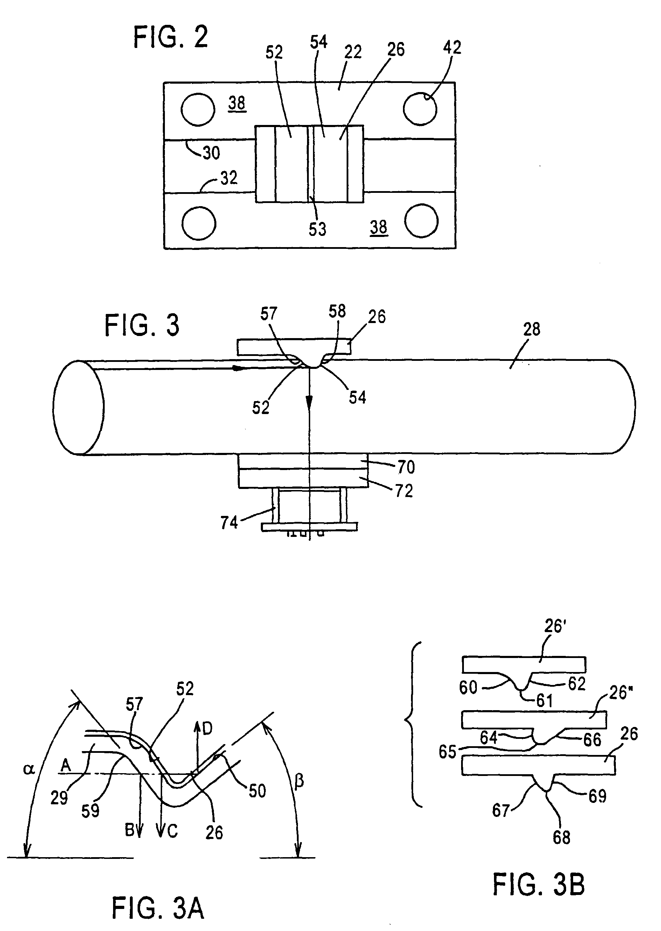

Indenting assembly 20 includes an upper member 22 having a housing 23 and a lower member 24 having a housing 25. Located within upper member 22 is an indenting portion 26. The indenting portion 26 can either be made of a light transmissive material or a light reflective material or a combination thereof. The indenting portion 26 can be integral to upper member 22 or can be a separate member as depicted in Figure 2A. Indenting portion 26 is centrally located within housing 23. A portion of a longitudinally extending optical waveguide 28 is positioned between upper member 22 and lower member 24. Although optical waveguide 28 is depicted without an outer cover in Figure 1, the present invention is usable with either an optical fiber (cladding only but no buffer) or an optical cable (cladding and buffer). If the optical waveguide has an outer cover (buffer), the buffer waveguide on the optical cable does not necessarily need to be removed to use the present invention if the buffer is optically transparent. The optical cable has a light carrying core surrounded by an outer cover which would include a cladding and a buffer. The buffer must be transparent for the wavelength used, otherwise the buffer has to be stripped. The optical waveguide preferably has a circular outer diameter and can also have a rectangular cross-section. The cladding has lower index of refraction than the light carrying core and is immediately adjacent. The cladding causes light to travel within the light carrying core by internal reflection. The light carrying core of the optical waveguide 28 is formed from a deformable optical material such as plastic. Plastic optical fibers permit data transmission rate of up to 3 Gbit/s and are available commercially from companies including, for example, Boston Optical Fiber. Plastic can be deformed when subjected to pressure and if indenting portion 26 has the proper geometry, the plastic will deform but not crack or fracture or rupture. Glass is not usable with the present invention.

Upper member 22 includes a longitudinally extending semi-circular recess 30 having an inner surface 32. Indenting portion 26 is located within recess 30. Lower member 24 has a longitudinally extending semi-circular recess 34 having an inner surface 36. Together, recesses 30, 34 form a circular through bore extending through indenting assembly 20. Recesses 30, 34 are sized to prevent movement of optical waveguide 28 relative to housings 23, 25.

Upper member 22 has a flat lower surface 38 located on either side of recess 30. Lower member 24 has a flat upper surface 40 located on either side of recess 34. Upper member 22 has four bolt holes 42 and lower member 24 has four corresponding bolt holes 44. When surface 38 is brought into abutting relation with surface 40, bolts (not shown) are used to fasten together upper member 22 and lower member 24 forming indenting assembly 20. Bolt holes 42 and 44 extend through surfaces 38, 40, respectively. Other known means of fastening together upper member 22 and lower member 24 can be used, including snapping the assembly together. In operation, once fastened together, indenting assembly 20 remains secured to the optical waveguide 28 to prevent relaxation of the indented plastic optical material. If the indenting assembly 20 were removed, the plastic light carrying center might distort and reflective surface 57 might not properly reflect the optical signal.

Recesses 30 and 34 are sized for a particular outside diameter of the optical waveguide 28. When the optical waveguide 28 is placed into recesses 30 and 34 and upper member 22 and lower member 24 are fastened together, indenting portion 26 is brought into engagement with an outer diameter of the optical waveguide 28 so as to form an indent or deformation 50 as depicted in Figure 1. As depicted in Figure 1, the indenting portion 26 includes a first surface 52, an intermediate surface 53 and a second surface 54. Surfaces 52, 53, 54 form a triangularly shaped indenting portion 26 with intermediate surface 53 being located at the apex of the triangle. Surfaces 52 and 54 are flat and surface 53 is preferably curved and is convex as depicted in Figure 1.

Indent 50 has a first outer flat surface 57, a curved outer intermediate surface 59 and a second flat outer surface 58. Outer surfaces 57, 59, 58 can be the cladding or the buffer (if transparent) depending on whether an optical cable or optical fiber is used as the optical waveguide. Surfaces 57, 58, 59 correspond in shape to surfaces 52, 53, 54, respectively and are in contact therewith. Flat surfaces 57, 59 can be reflective surfaces depending on the angle as discussed below with respect to Figure 3A. When pressure is exerted by indenting portion 26' on the optical waveguide 28, the optical waveguide is deformed or indented but is not caused to fracture or crack because the indenting portion 26 does not cause shearing of the optical material.

As depicted in Figure 2, surfaces 52, 53, 54 extend transversely. Surfaces 52, 53 and 54 have a transverse width greater than the width of recess 30.

Referring now to Figure 3, an indented optical fiber 28 is depicted with housings 23, 25 of upper member 22 and lower member 24 being omitted, respectively, for clarity. In operation, an optical signal is being carried by optical waveguide 28 and is travelling from left to right as depicted in Figure 3. A portion of the optical signal carried by the optical waveguide 28 strikes first surface 57 and is reflected transversely. The optical signal will exit through the outer diameter of the optical cable 28 and through any cladding. As depicted in Figure 3, the optical signal is reflected at a 90° angle because surface 57 is at approximately a 45° angle. The angle at which surface 57 is located can be changed by varying the angle of surface 52.

Referring now to Figure 3A, the indenter 26 is depicted within indent 50. Light travelling in the light carrying core can be reflected off of any one of three surfaces depending on the geometry of the indenter 26, the angle of the cladding, and the material used for the indenter. As depicted in Figure 3A, light ray A can be reflected as light ray B, light ray C or light ray D. The optical signal will be reflected off of surface 59 of cladding 29 inwardly as light ray B. The optical signal will pass through surface 59 and cladding 29 (if the angle λ of surface 59 is less than 45°) and will be reflected of surface 57 of indenter 26 inwardly as light ray C if surface 57 is light reflective. If the angle λ of surface 59 is less than 45° and indenter 26 is made of a light transmissive material, and the angle β surface 50 is greater than 45°, then the optical signal will be reflected off of surface 50 outwardly as light ray D. The reflective surface reflects the optical signal carried by the light carrying core according to Snells law where the angle of reflectance is equal to the angle of incidence.

Referring now to Figure 3B, many geometries are possible for indenting portion 26 which permit the indenter and/or the cladding of the optical fiber to be either reflective or light transmissive. The discussion for indenting portion 26 is applicable for all alternative indenting portions 26', 26'', 26'''. Referring to Figure 3B, an alternative indenting portion 26' is depicted. Indenting portion 26' has a first surface 60, an intermediate surface 61 and a second surface 62. The indent 50 will be formed to conform to the shape of indenter 26'. First surface 60 is a curved surface, preferably concave. Surfaces 60 and 62 will be partially light transmissive and partially reflective depending on the curvature of the surfaces 60, 62. A convexly curved intermediate surface 61 joins a flat second surface 62. Surface 62 is preferably relatively flat and surface 61 is curved. As depicted, light travelling from left to right would pass through the cladding (not shown) adjacent surface 60. Light travelling from right to left would be reflected by the cladding surface adjacent surface 62.

A second alternative indenting portion 26'' is depicted in Figure 2A. Indenting portion 26' has a first surface 64, an intermediate surface 65 and a second surface 66. The first surface 64 has a convex curved shape which will be reflective. Intermediate surface 66 has a convexly curved shape and will be light transmissive. Second surface 66 is flat. As depicted, light travelling from left to right would be reflected off the cladding (not shown) adjacent surface 64. Light travelling from right to left would pass through the cladding adjacent surface 66.

A third alternative indenting portion 26'''is depicted in Figure 2A. Indenting portion 26''' has a first flat surface 67 and a second flat surface 69 joined by a convexly curved intermediate surface 68. Both surfaces 67 and 69 will be light reflective. In all of the described indenting portions 26, the indenting portion advantageously does not cause the optical waveguide to crack, rupture or break when the indent is formed. As depicted, light travelling from left to right would be reflected off the cladding (not shown) adjacent surface 67. Light travelling from right to left would be reflected off the cladding (not shown) adjacent surface 69.

The amount of light reflected by surface 57 can be varied by varying the depth of indent 50. As depicted in Figure 1, the depth of indent 50 as defined by surface 59 is approximately ten percent of the diameter of optical waveguide 28 towards a λ filter 70 which is a wavelength filter positioned adjacent to waveguide 28. A polarizer 72 is positioned adjacent to and below filter 70 and a light sensor 74 is positioned adjacent to and beneath polarizer 72. As depicted in Figure 3, the indenting portion 26 would be located in upper housing 23 and λ filter 70, polarizer 72 and light sensor 74 would be located in lower housing 25. The reflective surface 57 and the light sensor 74 are diametrically opposite from each other as depicted in Figure 3. Each of the devices 70, 72, 76 is centrally located relative to indent 50.

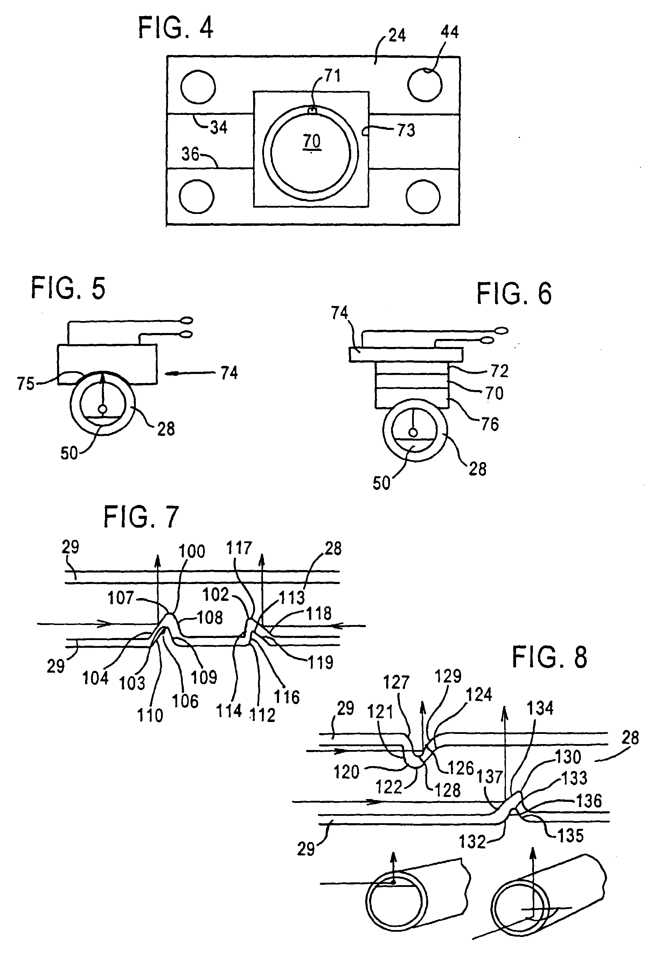

Referring now to Figure 4, the lower member 24 is depicted. The λ filter 70 is depicted as positioned within a recess 73 in the lower member 24. The filter 70 is preferably centrally positioned within the recess 73 and the filter 70 has a larger diameter than the width of recess 34. A tab 71 is used to orient filter 70.

In Figure 5-8, various alternative arrangements of indents, filters, polarizers and light sensors are illustrated in schematic form. As depicted in Figure 5, light sensor 74 is located diametrically opposite from indent 50 and light reflected from indent 50 is reflected transversely into sensor 74. As depicted in Figure 5, light sensor 74 has a curved surface 75 which is directly positioned on an outside diameter of the optical waveguide 28, transversely opposite from indent 50. The operation of the Figure 5 arrangement is otherwise identical to the Figure 3 arrangement.

As depicted in Figure 6, a conforming pad 76 is located diametrically opposite the indent 50 formed in the optical waveguide 28. Located directly above the conforming pad 76 is λ filter 70 and directly above λ filter 70 is a polarizer 72. A light sensor is located directly above polarizer 72. Each of the devices 70, 72, 74, 76 is centrally located relative to indent 50.

As depicted in Figure 7, there are two indents 100, 102 located at the same angular location on optical waveguide 28. The first recess 100 is formed by a first indenting portion (not depicted for clarity) and the second recess 102 is formed by a second indenting portion (not depicted for clarity). The first and second indenting portions can be located in housing 23. The first recess 100 includes a first recess surface 104, a second recess surface 108 and an intermediate surface 107 adjacent surfaces 110, 109, 103 of cladding 29. The second recess includes a first surface 114, a second surface 118 and an intermediate surface 117 adjacent surfaces 116, 119, 118 of cladding 29. In operation, light traveling through optical waveguide 28 can travel in opposite directions and be reflected transversely by surfaces 104, 118, respectively, of cladding 29 inwardly through diametrically opposite cladding 29 into light sensors (not shown).

Referring now to Figure 8, another two indent embodiment is depicted. A first indent 120 is longitudinally spaced and diametrically opposite from a second indent 130. In this embodiment, an indenter and two light sensors (not shown) are located in the upper housing 23. An indent 120 has a first surface 121, a second surface 124 and an intermediate surface 122 formed by an indenter forming surfaces 127, 126, 129, respectively in cladding 29. The indenter is located within upper housing 23. The second indent has a first surface 137, an intermediate surface 133 and a second surface 134 formed by indenter 136 having surfaces 132, 133, 135, respectively. In this embodiment, the indenter is made of a transparent optically transmissive material. A portion of the light traveling from left to right passes through surfaces 121, 127 and is reflected off surface 126 into a light sensor. A portion of the light traveling from left to right is reflected off of surface 134, through the optical waveguide 28 and through the outside diameter into a light sensor.

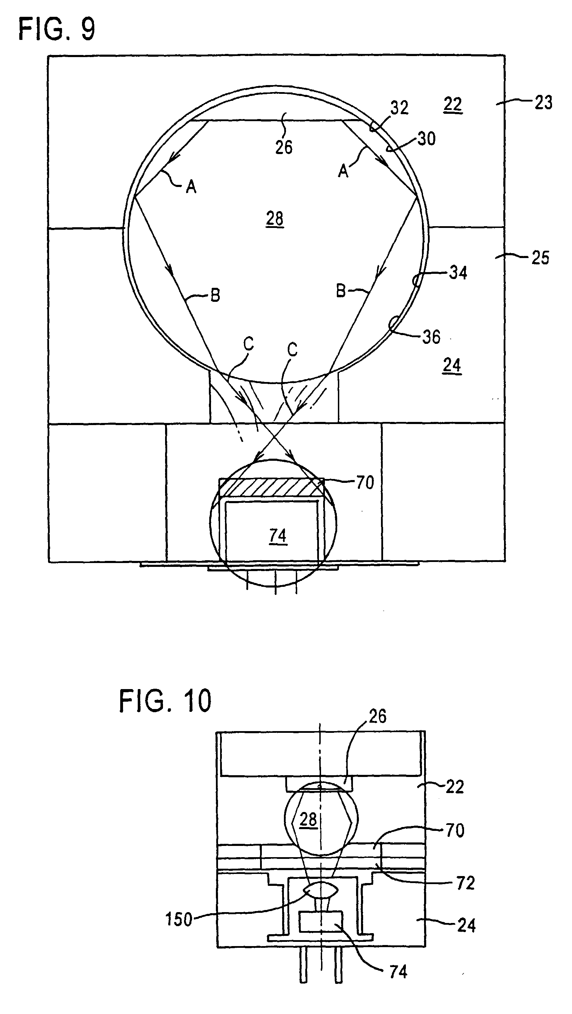

Refer now to Figure 9 which depicts light rays being reflected from surface 57 (Figure 1) into λ filter 70 into light sensor 74. Some of the light rays are reflected by indent 26 into the cladding on the outer diameter of the optical waveguide 28 and then the angle of incidence is such that the light rays are focused by the cladding on the optical waveguide outer diameter into a through hole. Light rays are then impinged on λ filter 70 and are received by light sensor 74.

Figure 10 expands upon the principles explained with respect to Figure 9 and shows the light rays being further focused by a lens 150 positioned below optical waveguide 28. This arrangement improves the amount of light received by the light sensor 74.

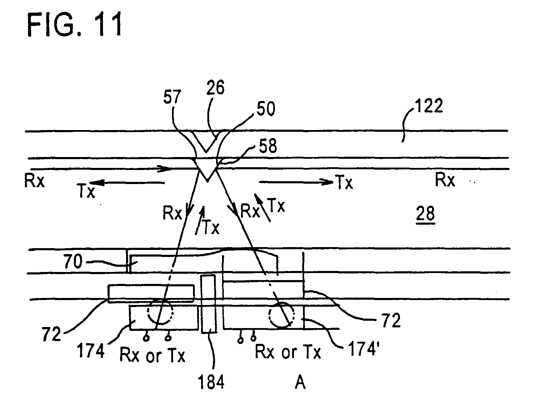

Referring now to Figure 11, indent 50 can be formed so that light is reflected off of two surfaces 57, 58 in a direction other than perpendicular. As depicted in Figure 11, for example, surface 57 can be angled so that an optical signal is reflected so the light sensor is positioned longitudinally offset relative to indent 50. A pair of light sensors or transmitters 174, 174' are each longitudinally offset relative to indent 50 so that surface 57 reflects light into light sensor 174 through filter 70 and surface 58 reflects light into light sensor 174' through filter 70. A spacer 184 is positioned between light sensors 174 and 174' to prevent dispersed light from impinging on the light sensors 174, 174'. In this manner, a single indent 50 can be used to transmit/receive two optical signals, traveling in two directions in the optical waveguide 28.

It should be understood that in any of the embodiments discussed herein, a light transmitter can be substituted for a light sensor. In other words, light could be injected into the optical waveguide 28 and reflected off of indent 50. It should also be understood that arrays of fibers and detectors and receiving diodes can be used with the present invention. The tapped light can also be carried directly to an integrated circuit such as OPTOFET transformer amplifier.

It should now be apparent that a method of forming an indent and apparatus for forming same have been described in which the indenting assembly indents an optical waveguide in a manner so as to deform the optical waveguide so light can be reflected off of the indent into a light sensor or, alternatively, light can be injected without rupturing, cracking or breaking the optical fiber.

It will be readily seen by one of ordinary skill in the art that the present invention fulfills all of the objects set forth above. After reading the foregoing specification, one of ordinary skill will be able to affect various changes, substitutions of equivalents and various other aspects of the invention as broadly disclosed herein. It is therefore intended that the protection granted hereon be limited only by the definition contained in the appended claims and equivalents thereof.

## Claims

1. An arrangement for tapping an optical signal from an intermediate portion of an optical waveguide, the optical waveguide having an outer surface, comprising:
a first member having an indenter, said indenter at least partially positioned in an indent formed in the intermediate portion of the optical waveguide at least one of the indent and said indenter having a reflective surface;
an optical device optically coupled to the optical waveguide for transmitting/receiving light reflected off the reflective surface and carried in the optical waveguide.

2. The arrangement of claim 1, further comprising a second member fastenable to said first member, said optical device connected to one of said first member and said second member.

3. The arrangement of claim 1, further comprising a wavelength filter positioned between said optical waveguide and said optical device.

4. The arrangement of claim 3, further comprising a polarizer positioned between said filter and said optical device.

5. The arrangement of claim 3, further comprising an index conforming pad positioned between said filter and said optical device.

6. The arrangement of claim 1, wherein said indenter is optically transmissive.

7. The arrangement of claim 3, wherein said filter is a wavelength separation filter.

8. The arrangement of claim 1, wherein said first member has a recessed area and said indenter is positioned in said recessed area, said recessed area shaped to conform to the shape of the indenter.

9. The arrangement of claim 2, further comprising fastening means for fastening said first member to said second member together.

10. The arrangement of claim 1, wherein said indenter has a v-shape.

11. The arrangement of claim 1, wherein said indenter has a curvilinear shape.

12. The arrangement of claim 1, wherein said indenter forms an indent in the optical waveguide transverse relative to the optical waveguide.

13. The arrangement of claim 1, wherein the intermediate portion is intermediate a first contiguous portion and a third contiguous portion, said first, intermediate and third portions being substantially straight when said indenter is at least partially positioned in said indent.

14. The arrangement of claim 1, wherein the depth of the indent is approximately ten percent of a diameter of the optical waveguide.

15. The arrangement of claim 1, wherein said optical device is a light emitting diode.

16. The arrangement of claim 1, wherein said indenter is optically transmissive.

17. The arrangement of claim 1, wherein said optical device is positioned diametrically opposite the indent.

18. The arrangement of claim 1, wherein said indent has at least one reflective surface.

19. The arrangement of claim 1, wherein the indenter has a first surface, a second surface and an intermediate surface, said intermediate surface being shaped so as to deform but not fracture the optical waveguide.

20. The arrangement of claim 19, wherein said indenter has two reflective surfaces.

21. The arrangement of claim 19, wherein said the indent has two reflective surfaces.

22. The arrangement of claim 1, wherein said optical waveguide is an optical fiber.

23. The arrangement of claim 1, wherein said optical waveguide is an optical cable, said optical cable has an outer cover including a cladding.

24. An apparatus, comprising:
an optical waveguide in a substantially straight condition;
a first member having an indenter, said indenter at least partially positioned in an indent formed in an intermediate portion of the optical waveguide at lest one of the indent and said indenter having a reflective surface;
an optical device optically coupled to the optical waveguide for transmitting/receiving light reflected off the reflective surface and carried in the optical waveguide.

25. The arrangement of claim 24, wherein said indenter is optically transmissive.

26. The arrangement of claim 24 wherein said indent has at least one reflective surface.

27. The arrangement of claim 24, wherein the indenter has a first surface, a second surface and an intermediate surface, said intermediate surface being shaped so as to deform but not fracture the optical waveguide.

28. The arrangement of claim 24, wherein said indenter has at least one reflective surface.

29. A method of tapping an optical signal from an optical waveguide having cladding, comprising:
indenting the optical waveguide to form an indent;
positioning a reflective surface in the indent; and
reflecting the optical signal off of the reflective surface through the waveguide into a light sensor.

30. The method of claim 29, wherein said indenting step deforms the optical waveguide but does not fracture the optical waveguide.

31. The method of claim 29, wherein the reflective surface is flat.

32. The method of claim 29, further comprising positioning a wavelength filter between the optical waveguide.

33. The method of claim 29, comprising maintaining the optical waveguide in a substantially straight condition.

34. The method of claim 29, wherein the indenting step is performed with an indenter.

35. The method of claim 34, wherein the indenter is optically transmissive.

36. The method of claim 34, wherein the indenter is reflective.

37. The method of claim 29, wherein the reflecting step reflects the optical signal inwardly.

38. The method of claim 29, wherein the reflecting step reflects the optical signal outwardly.

39. The method of claim 29, wherein the reflecting step reflects the optical transversely.

40. The method of claim 34, wherein the indent is optically transmissive and the optical signal is reflected by the cladding outwardly.

41. The method of claim 29, wherein the indenting step forms a surface on the cladding at an angle greater than 45°, thereby forming a reflective surface on the cladding.

42. The method of claim 29, wherein the indenting step forms a surface on the cladding at an angle less than 45°.

43. The method of claim 42, wherein the indenter is reflective and the optical signal passes through the surface and is reflected off a reflective surface on the indenter.

44. The method of claim 42, wherein the indenter is optically transmissive and the optical signal passing through the surface and the indenter and is reflected off a reflective surface in the cladding.
